(19) Europäisches Patentamt
European Patent Office
Office européen des brevets

(11) Veröffentlichungsnummer: **0 142 658**
**A1**

(12) **EUROPÄISCHE PATENTANMELDUNG**

(21) Anmeldenummer: 84110918.4

(22) Anmeldetag: 13.09.84

(51) Int. Cl.⁴: A 01 N 25/34

(30) Priorität: 15.10.83 DE 3337592

(43) Veröffentlichungstag der Anmeldung: 29.05.85 Patentblatt 85/22

(84) Benannte Vertragsstaaten: FR IT NL

(71) Anmelder: GESELLSCHAFT FÜR STRAHLEN- UND UMWELTFORSCHUNG M.B.H.
Ingolstädter Landstrasse 1 Post Oberschleissheim
D-8042 Neuherberg(DE)

(72) Erfinder: Bahadir, Müfit, Dr.
Birkenweg 13
D-8051 Zolling(DE)

(72) Erfinder: Pfister, Gerd, Dr.
Mühlenweg 3a
D-8050 Freising(DE)

(72) Erfinder: Korte, Friedhelm, Prof. Dr.
Sonnenstrasse 2
D-8053 Attenkirchen(DE)

(74) Vertreter: Gottlob, Peter
Kernforschungszentrum Karlsruhe GmbH Stabs. Patente und Lizenzen Weberstrasse 5
D-7500 Karlsruhe 1(DE)

(54) **Träger aus organischem Material mit integrierten Wirkstoffen.**

(57) Die Erfindung betrifft ein Verfahren zur Herstellung und für den Einsatz von Pflanzenschutzmitteln, bevorzugt im Bereich von Landwirtschaft und Gartenbau, in Form von Folien, Vlies und Gewebe aus organischem Material mit integrierten Wirkstoffen. Die integrierten Wirkstoffe migrieren aus der polymeren Matrix langsam heraus und entfalten dadurch ihre Wirkung am Applikationsort. Solche Träger-Wirkstoff-Kombinationen können für Pflanzenbedeckung, Mulchen und im Vorratsschutz eingesetzt werden.

EP 0 142 658 A1

Croydon Printing Company Ltd

Träger aus organischem Material mit integrierten Wirkstoffen.

Die vorliegende Erfindung betrifft einen Träger gemäß dem Oberbegriff des Anspruches 1 sowie Verfahren zur Herstellung und Verwendung desselben.

Kunststoff-Folien werden in der Landwirtschaft und Gartenbau zunehmend zur Wachstumsförderung und zum Ernteschutz eingesetzt. So haben perforierte Bedekkungsfolien im Frühgemüsebau und Mulchfolien in Mais- und Erdbeerkulturen Bedeutung erlangt. Durch die Bedeckung der Kulturen wird unter der Folie ein Kleinklima geschaffen, das in der kalten Jahreszeit im Frühjahr deutlich höhere Temperaturen aufweist als die unbedeckte Umgebung und damit das Wachstum fördert. Gleichzeitig mit der Wachstumsförderung der Kulturpflanzen werden jedoch auch die unerwünschten Unkräuter gefördert, die als Licht- und Nahrungskonkurrenten die Kulturpflanzen behindern und daher bekämpft werden müssen. Daneben können jedoch in diesem feuchtwarmen Mikroklima auch Pilzkrankheiten wie Mehltau u.a. sowie frühe Schadinsekten wie Kohlfliege u.a. gedeihen, die ebenfalls bekämpft werden müssen.

Die Bekämpfung erfolgt derzeit so, daß die benötigten Pflanzenschutzmittel vor dem Auflegen der Folie auf das Feld aufgebracht werden, z.B. in Form von Spritzbrühen bzw. Stäubemitteln, und danach die Folie aufgelegt wird. Eine nachträgliche Schädlings- bzw. Unkrautbekämpfung nach dem Auflegen der Folie ist nicht mehr möglich. Will man sie dennoch vornehmen, so erfordert dies eine Abnahme und anschließende Wiederauflage der Folie, was das Verfahren unwirtschaftlich macht.

Die Bedeckungsdauer der Pflanzenkulturen beträgt im allgemeinen zwei bis drei Monate. Das bedeutet, daß die Pflanzenschutzmittelwirkung dieser Zeit angepaßt werden muß. Bei einer einmaligen Applikation vor der Folienauflage muß die Wirkstoffmenge entsprechend hoch gewählt werden, um über eine längere Zeit ohne weitere Nachbehandlung wirksam zu sein. Die bei der Applikation ausgebrachte Überschußmenge unterliegt jedoch Auswaschungen, da die Pflanzenschutzmittel in bestimmtem Umfang wasserlöslich sind. Das führt zu den bekannten Problemen der Belastung des Bodens, des Grundwassers und der Wasserläufe, aus denen Trinkwasser gewonnen wird.

Es bestand daher die Aufgabe, solche Formulierungen zu entwickeln, die im genannten Einsatzbereich des Folienanbaues die Pflanzenschutzmittelanwendung umweltverträglicher gestaltet, ggf. zugesetzte Wirkstoffüberschüsse nach der Wachstumsphase wieder entfernt werden können. Weiterhin sollten sie nicht beschränkt sein auf einige wenige Pflanzenschutzmittel, sondern allgemein anwendbar sein. Die Wirtschaftlichkeit sollte dadurch gewährleistet werden, daß bekannte Technologien verwendet werden können.

Erfindungsgemäß wird diese Aufgabe mittels der kennzeichnenden Merkmale des Anspruches 1 gelöst.

Die übrigen Ansprüche geben bevorzugte Ausführungsbeispiele, Weiterbildungen, Verfahren zur Herstellung und Verwendungszwecke der Erfindung wieder.

Die Erfindung wird im folgenden anhand von Ausführungsbeispielen 1 - 29, einer Figur sowie einer Tabelle näher erläutert.

Unter Träger aus organischem Material im Sinne der vorliegenden Erfindung werden Matrizes aus organischen Polymeren verstanden, in denen die Wirkstoffe und die Hilfsstoffe integriert werden können und die zu Folien und/oder Vliesen und/oder Gewebe verarbeitet werden können. Als Träger geeignet sind damit solche organischen Polymere, die von Polymerisaten, z.B. Homo- bzw. Copolymerisate aus substituierten und unsubstituierten $\alpha$-Olefinen mit sich selbst oder mit anderen wie Polyethylen, Polypropylen, Polybuten, Polystyrol, Polymethylpenten, Ethylenvinylacetat, Ethylenethylacrylat, Polyisopren, Polybutadien, Copolymerisaten von Ethylen mit höheren $\alpha$-Olefinen u.a., von Polykondensaten und/oder Polyaddukten, z.B. Polyamiden, linearen Polyurethanen, linearen Polyestern, Polycarbonaten, Polyacetaten, Polyethern u.a., von abgewandelten Naturprodukten, z.B. Hydratcellulose, Celluloseestern, Celluloseethern, Latex, Linoxyn, Faktis u.a. abstammen.

Unter Pflanzenschutzmitteln im Sinne der vorliegenden Erfindung werden Insektizide, Akarizide, Nematizide, Repellents, Fungizide, Herbizide, Rodentizide, Molluskizide, Wuchs- und Hemmstoffe und Synergisten verstanden. Die chemische Abstammung dieser Wirkstoffe ist unkritisch.

Sie können aus den verschiedensten chemischen Verbindungsklassen abstammen. Die einzige Einschränkung ist, daß sie unter den Herstellungsbedingungen der Träger-Wirkstoff-Kombinationen stabil sind. Somit kommen Verbindungen z.B. aus den chemischen Klassen der Chlorkohlenwasserstoffe (Lindan u.a.), Organophosphorsäureester (Parathion u.a.), Carbamate (Carbofuran u.a.), Cyclodien-Derivate (Endosulfan u.a.), Pyrethriode (Cypermethrin u.a.), Xanthogenate (Dixanthogen u.a.), Triazol-Derivate (Azocyclotin u.a.), organische Sulfide (Chlorfensulfid u.a.), metallorganische Verbindungen (Cyhexatin u.a.), Thiadiazin-Derivate (Dazomet u.a.), Phthalate (Dimethylphthalat u.a.), Morpholin-Derivate (Aldimorph u.a.), Triazin-Derivate (Desmetryn u.a.), Anilide (Benodanil u.a.) Imidazole (Benomyl u.a.), Phthalimid-Derivate (Captan u.a.), Sulfamide (Dichlofluanid u.a.), Pyrimidin-Derivate (Dimethirimol u.a.), Thiadiazole (Etridiazol u.a.), polymere Dithiocarbamate (Maneb u.a.), monomere Dithiocarbamate (Sulfallate u.a.), Oxazolidin-Derivate (Vinchlozolin u.a.), Harnstoffderivate (Monolinuron u.a.), Benzoesäure-Derivate (Chlorthiamid, Dichlobenil u.a.), Phenoxyalkansäure-Derivate (2,4-D u.a.), Arylalkansäure-Derivate (Fenac u.a.), Anilin-Derivate (Fluchloralin u.a.), Uracil-Derivate (Lenacil u.a.), Pyridazon-Derivate (Chloridazin bzw. Pyrazon u.a.), Thioharnstoff-Derivate (Antu u.a.), Coumarin-Derivate (Coumafuryl u.a.), Arylalkanol-Derivate (Ancymidol u.a.), Indolyl-Derivate (Indolylessigsäure u.a.), Dialkansäure-Derivate (Maleinsäurehydrazid u.a.), Chloralkanether-Derivate (Octachlor-dipropylether u.a.), und Sulfoxid-Derivate (Sulfoxide u.a.) erfindungsgemäß zum Einsatz.

Die Herstellung der Träger-Wirkstoff-Kombinationen kann nach bekannten Verfahren durchgeführt werden. Bei thermoplastischen Trägern kommen bevorzugt Schneckenextruder zur Herstellung dieser Formulierungen zum Einsatz. Hierzu werden die Polymergranulate, die Pflanzenschutzmittel und ggf. die Hilfsstoffe vorgemischt und in Schneckenextruder plastifiziert und zu Folien, Vliesen und Fasern für Gewebe verarbeitet. Beim Inkorporieren von flüssigen Wirkstoffen in organische Polymere in Einschneckenextrudern ohne Zwangsförderung kann es zur Unterbrechung des Ausstoßes kommen, da die Flüssigkeiten als Schmierfilm die Granulatförderung behindern. In diesen Fällen können die Polymergranulate erfindungsgemäß teilweise oder ganz durch Polymerpulver und/oder teilweise durch andere pulverförmige Adsorbentien wie z.B. feinteilige Silicagele oder Kieselgure substituiert werden, wodurch die Masseförderung im Extruder wieder problemlos erfolgt.

Die zeitlich kontrollierte Freisetzung der Pflanzenschutzmittel aus den Träger-Wirkstoff-Kombinationen wird zum einen von der Art des Trägers und zum anderen von der Polarität der Wirkstoffe bestimmt. Die Menge der in die Trägermatrix inkorporierbaren Wirkstoffmenge gehorcht gleichen Gesetzmäßigkeiten. Somit kommt einer zutreffenden Bestimmung dieser Polaritäten im Verhältnis zu den verwendeten Polymeren eine zentrale Bedeutung zu. Eine besonders einfache und wirksame Methode zur Vorabbestimmung der Eignung der Träger-Wirkstoff-Kombinationen im Sinne dieser Erfindung ist die Ermittlung der Rf-Werte der Pflanzenschutzmittel in Umkehrphasen-Dünnschichtchromatographie. Die so ermittelten Rf-Werte zeigen eine relative Polaritätsreihe an, die den Löslichkeiten der Pflanzenschutzmittel in den erfindungsgemäßen Träger-Wirkstoff-Kombinationen entspricht (Figur; Sättigungskonzentrationen ($C_s$) der Pflanzenschutzmittel in Folien (70 µm dick) in Abhängigkeit von ihrer relativen Polarität, bestimmt durch RP-TLC [$C_{18}$, 75 % $CH_3CN$ in $H_2O$ (v/v)]

I: Metoxuron
II: DDVP
III: Monolinuron
IV: Desmetryn
V: Chlorfenvinphos
VI: Lindan
VII: Parathion
VIII: Endosulfan ($\overline{\alpha+\beta}$)).

Bei der Verwendung von C-18 Phasen in Verbindung mit Acetonitril/Wasser = 75/25 (V/V) sind jene Pflanzenschutzmittel besonders geeignet, deren Rf-Werte in einem Bereich zwischen 0,1 und 0,8 bevorzugt zwischen 0,2 und 0,7 liegen.

Sollten für die Herstellung oder Applikation der Träger-Wirkstoff-Kombinationen Hilfsstoffe erforderlich sein, so können diese bei der Herstellung der Formulierungen gleichfalls den Ausgangsmischungen zugesetzt und mit dem Wirkstoff gemeinsam verarbeitet werden. Als Hilfsstoffe kommen in erster Linie Polymeradditive in Frage, die die Verarbeitung vereinfachen oder die Formulierungen am Applikationsort schützen. Solche Hilfsstoffe stammen bevorzugt aus der Klasse der Antioxidantien (z.B. Bisphenole, Hydroxibenzylverbindungen, 4-Hydroxianilide, Amine, Thioether, Phosphite u.a.), der Lichtschutzmittel (z.B. 2-Hydroxibenzophenone, 2-Hydroxiphenylbenzotriazole, nickelorganische Verbindungen, Säureester, sterisch gehinderte Amine u.a.), der Gleitmittel (z.B. Fettalkohole, Dicarbonsäureester, Fettsäureester, Fettsäuren, fettsaure Seifen, Fettamide, Montansäuren, Montansäureester, Parafine, Polyethylenwachse u.a.), der Weichmacher (z.B. Ester der Phosphorsäuren, der Phthalsäuren, der Fettsäuren, der Alkansäuren, der Dicarbonsäuren, der Sulfonsäuren, Sulfamide, Alkohole, Ether, Ketone, Kohlenwasserstoffe u.a.), der Antistatika (u.B. quartäre Ammonium-, Phosphonium-, Sulfoniumsalze, Alkylsulfonate, -sulfate, -phosphate, -dithiocarbamate, -carboxylate, Polyethylenglykolester, -ether, Fettsäureester, -ethanolamide, Glyceride, Fettamine u.a.) und Pigmente und Füllstoffe (anorganische und organische Farbstoffe oder Füllstoffe wie Carbonate, Silicate, Sulfate, Graphit, Fasern, Farbpigmente u.a.) ab.

Als Einsatzgebiete dieser Träger-Wirkstoff-Kombinationen kommen die Bedeckung des Bodens und/oder der Pflanzenkulturen in Betracht. Durch die Bekämpfung der Schadorganismen und/oder durch die Regulierung des Kulturpflanzenwachstums werden die in Landwirtschaft und Gartenbau angebauten Pflanzen in ihrem Wachstum begünstigt. Durch die zeitlich kontrollierte Abgabe der Wirkstoffe aus diesen Formulierungen werden Überschußkonzentrationen im System Pflanze/Boden vermindert und unerwünschte Rückstandsprobleme verhindert.

Auch zum Schutz von Erntevorräten sind solche Formulierungen gut geeignet. Lagert man das Erntegut (z.B. Saatgut) in Säcken aus diesen Träger-Wirkstoff-Kombinationen, kann es vor Schadorganismen wirksam geschützt werden. Für zum Verzehr vorgesehenes Erntegut sind mehrschichtige Behältnisse besser geeignet, wenn das innerste Behältnis aus einem wirkstofffreien Material hergestellt ist. Damit wird eine unbeabsichtigte Kontamination des Erntegutes durch Wirkstoffe aus den äußeren Behältnissen wirksam verhindert.

Die Wirksamkeit der Träger aus organischem Material mit integrierten Wirkstoffen zum Einsatz in Landwirtschaft und Gartenbau wird an folgenden Beispielen exemplarisch belegt.

In allen Beispielen werden folgende handelsübliche LDPE- und EVA-Granulate eingesetzt:

<u>LDPE:</u> MFI 190/2,16 = 0,55 g/10 min; Dichte 0,921 $g/cm^3$

<u>EVA I:</u> 10 % VAc; MFI 190/2,16 = 0,55 g/10 min; Dichte 0,926 $g/cm^3$

<u>EVA II:</u> 20 % VAc; MFI 190/2,16 = 2 g/10 min; Dichte 0,939 $g/cm^3$

In den Beispielen, in denen diese Polymere gleichzeitig auch als Pulverware eingesetzt werden, handelt es sich um Pulver, die durch Kaltmahlung aus den oben genannten Granulaten hergestellt wurden und daher die gleichen Eigenschaften aufweisen.

Beispiel 1

5 g Lindan-Pulver und 95 g LDPE-Granulat werden in einem 1 l Rundkolben 1 Stunde durch Rühren gemischt. Diese Mischung wird in den Einzugtrichter eines Einschneckenextruders (20 mm ø x 25 D, Breitschlitzdüse: 100 x 0,5 mm, Folienabzug) mit 4 Heizzonen, die auf 150°C beheizt sind, eingefüllt und mit 25 UpM zu 70 µm dicken Flachfolien abgezogen. Aus Gründen der Gewerbehygiene wird der Extruder in einem begehbaren Abzug aufgestellt und der Bereich zwischen der Düse und Folienabzug zusätzlich vollständig umschlossen und separat abgesaugt.

Die Oberfläche von 5 g (ca. 8,5 x 80 cm) der erhaltenen Folie wird 24 h nach der Extrusion kurzzeitig (ca. 30 s) mit Methanol gewaschen, um den bei der Extrusion ausgeschwitzten Wirkstoff zu isolieren. Die gewaschene Folie wird in einem Soxhlet-Extraktor 12 h mit n-Hexan extrahiert. Die Menge des erhaltenen Lindans wird kapillargaschromatographisch (FID) ermittelt.

| | |
|---|---|
| Ausgeschwitzte Wirkstoffmenge: | 3,88 % |
| Inkorporierte Wirkstoffmenge: | 0,31 % |
| Wiederfindungsrate: | 83,40 % |

Beispiel 2

Es wird wie in Beispiel 1 gearbeitet. Es kommen 5 g Lindan und 95 g EVA I zum Einsatz.

Ausgeschwitzte Wirkstoffmenge: 2,79 %
Inkorporierte Wirkstoffmenge: 2,03 %
Wiederfindungsrate: 96,40 %

Beispiel 3

Es wird wie in Beispiel 1 gearbeitet. Es kommen 10 g Lindan und 90 g EVA II zum Einsatz.

Ausgeschwitzte Wirkstoffmenge: 1,05 %
Inkorporierte Wirkstoffmenge: 7,75 %
Wiederfindungsrate: 88,00 %

Vergleichsbeispiel 1 - 3

In diesen Vergleichsbeispielen wird gezeigt, daß eine starke Unverträglichkeit des Wirkstoffes mit dem Polymer Schwierigkeiten bei der Extrusion verursacht und nur sehr geringe Einbauarten bedingt.

Es wird wie in Beispiel 1 gearbeitet. Zum Einsatz kommen je 5 g Metoxuron mit je 95 g 1) LDPE, 2) EVA I, 3) EVA II. Die Förderung des Gemisches in der Schnecke stockt immer wieder. Gelegentlich wird flüssiger Wirkstoff aus der Düse ausgestoßen und es kommt zum häufigen Folienabriß.

Bei der Wirkstoffbestimmung mit Hilfe der HPLC (5 µg RP-18, I.D. 5 mm, L 100 mm, UV-Detektor, MeOH/$H_2O$) werden lediglich folgende inkorporierte Wirkstoffmengen ermittelt:
1)<< 0,1 % 2) 0,12 % 3) 0,75 %

Beispiele 4 - 6

In diesen Beispielen wird gezeigt, wie flüssige Wirkstoffe gleichfalls zum Einsatz gebracht werden.

Es wird wie in Beispiel 1 gearbeitet, mit dem Unterschied, daß der Wirkstoff Chlorfenvinphos flüssig ist. Es kommen 4) 2 g Chlorfenvinphos, 88 g LDPE-Granulat und 10 g LDPE-Pulver; 5) 5 g Chlorfenvinphos, 85 g EVA I-Granulat u. 10 g LDPE-EVA I-Pulver; 6) 10 Chlorfenvinphos, 80 g EVA II-Granulat und 10 g EVA-Pulver zum Einsatz. Die Extrusion verläuft unproblematisch. Die Analyse der erhaltenen Folien zeigt folgende inkorporierte Mengen von Chlorfenvinphos:
4) 0,39 % 5) 2,2 % 6) 5,38 %

Vergleichsbeispiele 4 - 6

In diesen Vergleichsbeispielen wird gezeigt, daß bei Fehlen des Polymerpulvers die Extrusion von flüssigen Wirkstoffen zu Folien nicht gelingt.

Es wird wie in Beispielen 4 - 6 gearbeitet, mit dem Unterschied, daß die Polymerpulver durch Granulate ersetzt werden. Die Wirkstoffmengen bleiben unverändert. Die Vermischung des Chlorfenvinphos mit den Granulaten führt zu klebrig-zähen Granulatschüttungen, die von der Extruderschnecke nicht gefördert werden. Folien werden so nicht erhalten.

Beispiele 7 - 9

In diesen Beispielen wird gezeigt, daß Pflanzenschutzmittel mit einem Schmelzpunkt oberhalb der Extrusionstemperatur und einer geringen Löslichkeit in der polymeren Matrix in Form einer Dispersion in die Folien inkorporiert werden können.

Es wird wie in Beispiel 1 gearbeitet.
Je 2 g Chloridazon (Pyrazon, Fp = 205°C) werden mit je 98 g Granulat von 7) LDPE, 8) EVA I und 9) EVA II zum Einsatz gebracht. Die Extrusion verläuft unproblematisch und es werden Folien mit dispergiertem Chloridazon erhalten. Das in n-Hexan schwerlösliche Chloridazon wird aus den Folien mit Chloroform extrahiert, in Methanol überführt, wobei das mitgelöste Polymer ausflockt. Die Wirkstoffmengen in methanolischen Lösungen werden mit HPLC bestimmt. Es werden die eingesetzten Wirkstoffmengen wiedergefunden.

Beispiele 10 - 27

In diesen Beispielen wird an einer weiteren Auswahl von Pflanzenschutzmitteln die breite Anwendungsmöglichkeit der Pflanzenschutzmittel als Folienformulierungen aufgezeigt.

Es wird wie in den vorangegangenen Beispielen 1 bis 6 gearbeitet. Die experimentellen Bedingungen und Ergebnisse sind in der Tabelle aufgeführt.

Die folgenden Beispiele befassen sich mit dem erfindungsgemäßen Einsatz von Pflanzenschutzmittel enthaltenden Folien hergestellt nach Beispielen 1 - 27 im Frühgemüseanbau. Die eingesetzten, mit Desmetryn herbizid ausgerüsteten Folien werden aus 70 µm dicken Flachfolien, wie in Beispiel 1 beschrieben, durch Aneinanderschweißen in Längsrichtung bis zu einer Breite von 1,20 m hergestellt. Es kommt EVA I (10 % VAc) zum Einsatz. In diese zusammengeschweißten breiten Folienstreifen werden 500 Löcher je $m^2$ von 1 cm Durchmesser gestanzt. Die wirkstofffreie Vergleichsfolie wird auf die gleiche Weise aus EVA I hergestellt.

Vergleichsbeispiel 7

In diesem Vergleichsbeispiel wird das normale Wachstum von Kulturpflanzen, Indikatorpflanzen und Unkräutern im Versuchsfeld unter Bedeckungsfolien demonstriert.

4 Versuchsparzellen mit den Maßen 1 x 2 m wurden am 13.4.1983 mit je 15 Weißkohlsetzlingen bepflanzt. In die gleichen Parzellen wurden je 50 Samen Salat, Kresse und Senf als gegenüber Desmetryn empfindliche Indikatorpflanzen gesät und die Parzellen mit wirkstofffreien EVA I Folien bedeckt.

Bei der Folienabnahme am 19.5.1983 wurde folgender durchschnittlicher Pflanzenbestand je Parzelle ermittelt:

| | | | | |
|---|---|---|---|---|
| Weißkohl | : | 13,5 Pflanzen | (90 %) | = 12,8 g TS |
| Salat | : | 20,8 Pflanzen | (42 %) | = nicht bestimmt |
| Kresse | : | 39,8 Pflanzen | (80 %) | = 8,7 g TS |
| Senf | : | 41,5 Pflanzen | (83 %) | = 13,7 g TS |
| Unkräuter | " | 316 Pflanzen | | = nicht bestimmt |

Beispiel 28

In diesem Beispiel wird gezeigt, daß die desmetrynenthaltende Bedeckungsfolie die Kulturpflanze (Weißkohl) nicht beeinträchtigt, aber desmetrynempfindliche Indikatorpflanzen und Unkräuter wirksam unterdrückt.

4 Versuchsparzellen 1 x 2 m, die denen im Vergleichbeispiel 7 benachbart lagen, wurden im gleichen Versuchszeitraum analog Vergleichsbeispiel 7 bepflanzt bzw. besät und mit 0,2 % Desmetryn enthaltenden EVA I Folien bedeckt. Bei der Folienabnahme wurden folgende Ergebnisse registriert:

| | | | | |
|---|---|---|---|---|
| Weißkohl | : | 14,6 Pflanzen | (97 %) = | 12,7 g TS |
| Salat | : | 0,8 Pflanzen | ( 2 %) = | nicht bestimmt |
| Kresse | : | 0 Pflanzen | ( 0 %) = | |
| Senf | : | 15,5 Pflanzen | (31 %) = | 3,2 g TS |
| Unkräuter | : | 89,2 Pflanzen | = | nicht bestimmt |

Bezieht man diese Ergebnisse auf die O-Parzellen, ergeben sich folgende Resultate:

| | | |
|---|---|---|
| Weißkohl | : | 108 % Pflanzen bezogen auf O-Parzellen |
| Salat | : | 4 % Pflanzen bezogen auf O-Parzellen |
| Kresse | : | 0 % Pflanzen bezogen auf O-Parzellen |
| Senf | : | 37 % Pflanzen bezogen auf O-Parzellen |
| Unkräuter | : | 28 % Pflanzen bezogen auf O-Parzellen |

Vergleichsbeispiel 8

In diesem Vergleichsbeispiel wird gezeigt, daß die Verwendung einer zu großen Konzentration an Desmetryn auch das Wachstum der Kulturpflanzen beeinträchtigt.

Dieses Vergleichsbeispiel wurde gemäß Vergleichsbeispiel 7 und Beispiel 28 angeordnet und durchgeführt, mit dem Unterschied, daß die EVA I Folien 1 % Desmetryn enthielten.

Nach anfänglichem Auflaufen sind sämtliche Pflanzen in diesen Parzellen nach Chlorosen abgestorben.

Beispiel 29

In diesem Beispiel wird gezeigt, daß die erfindungsgemäßen pestizidenthaltenden Folien als Mulchfolien gleichfalls geeignet sind.

4 Versuchsparzellen mit den Maßen 1 x 2 m, die ebenfalls den Parzellen im Vergleichsbeispiel 7 benachbart lagen, wurden am 25.4.1983 mit je 50 Samen Salat, Kresse und Senf besät und die Parzellen mit 2 % Desmetryn enthaltenden EVA I Folien bedeckt. Diese Folien enthielten neben den bereits beschriebenen 500 Löchern je $m^2$ zusätzlich 10 Löcher à 20 $cm^2$. In diese Löcher wurden 10 Weißkohlsetzlinge gepflanzt, so daß sich die Pflanzen hauptsächlich oberhalb der Folienbedeckung befanden. Bei der Folienabnahme nach 24 Tagen, am 19.5.1983, hatten sich 50 % der Weißkohlpflanzen entwickelt, während sämtliche Indikatorpflanzen und Unkräuter nach anfänglichem Auflaufen abgestorben waren.

Obwohl die Desmetrynkonzentration in den Mulchfolien das zweifache des Vergleichsbeispieles 8 betrug, überlebte dennoch die Hälfte aller Kulturpflanzen. Das demonstriert die geringere Beeinträchtigung der Kulturpflanzen oberhalb der Folienauflage durch den Wirkstoff, während alle Indikatorpflanzen und Unkräuter unter der Folie in ihrem Wachstum wirksam unterdrückt werden.

Tabelle Experimentelle Bedingungen und Ergebnisse der Beispiele 10 - 27

| Beispiel | Pflanzenschutzmittel | eingesetzte Menge [g] | eingesetzte(s) Polymer(menge) [g] Granulat | | Pulver | Extraktionsmittel | Bestimmungsmethode | inkorporierte Wirkstoffmenge [%] |
|---|---|---|---|---|---|---|---|---|
| 10 | Endosulfan (α,β) | 5 | LDPE | 95 | - | n-Hexan | GC | 1,07 |
| 11 | Endosulfan | 5 | EVA I | 95 | - | n-Hexan | GC | 3,37 |
| 12 | Endosulfan | 10 | EVA II | 90 | - | n-Hexan | GC | 10,20 |
| 13 | DDVP | 2 | LDPE | 88 | 10 | n-Hexan | GC | 0,07 |
| 14 | DDVP | 2 | EVA I | 88 | 10 | n-Hexan | GC | 0,51 |
| 15 | DDVP | 5 | EVA II | 85 | 10 | n-Hexan | GC | 1,33 |
| 16 | Parathion | 2 | LDPE | 88 | 10 | n-Hexan | GC | 0,76 |
| 17 | Parathion | 5 | EVA I | 85 | 10 | n-Hexan | GC | 3,25 |
| 18 | Parathion | 10 | EVA II | 80 | 10 | n-Hexan | GC | 6,86 |
| 19 | Monolinuron | 2 | LDPE | 98 | - | Chloroform | HPLC | 0,10 |
| 20 | Monolinuron | 5 | EVA I | 95 | - | Chloroform | HPLC | 0,80 |
| 21 | Monolinuron | 5 | EVA II | 95 | - | Chloroform | HPLC | 3,00 |
| 22 | Desmetryn | 2 | LDPE | 98 | - | Chloroform | GC | 0,35 |
| 23 | Desmetryn | 5 | EVA I | 95 | - | Chloroform | GC | 2,10 |
| 24 | Desmatryn | 5 | EVA II | 95 | - | Chloroform | GC | 4,40 |
| 25 | Dichlofluanid | 2 | LDPE | 98 | - | Chloroform | GC | 0,05 |
| 26 | Dichlofluanid | 3 | EVA I | 97 | - | Chloroform | GC | 0,16 |
| 27 | Dichlofluanid | 5 | EVA II | 95 | - | Chloroform | GC | 2,36 |

Gesellschaft für Strahlen- und Umweltforschung mbH, München

Neuherberg, 6.09.1984
PLA 8350 Ga/hr

Patentansprüche:

1. Träger aus organischem Material mit integrierten Wirkstoffen, gekennzeichnet durch
   a) organische Polymeren,
   b) Pflanzenschutzmittel und
   c) Hilfsstoffen in Form bzw. Gestalt von
   d) perforierten und/oder geschlossenen Folien oder
   e) perforierten und/oder geschlossenen Vliesen oder
   f) Gewebe zur Verwendung in Landwirtschaft und Gartenbau
   g) zur Begünstigung des Pflanzenwachstums in offenen und/oder bedeckten Kulturen oder
   h) zum Schutz von Erntegut durch Lagerung in einschichtigen und/oder mehrschichtigen Behältnissen.

2. Träger-Wirkstoff-Kombination nach Anspruch 1, dadurch gekennzeichnet, daß die Rf-Werte der Wirkstoffe bei Umkehrphasen-Dünnschichtchromatographie mit C-18-Phasen, in Acetonitril/Wasser = 75/25 (V/V) entwickelt, in einem Bereich zwischen 0,1 und 0,8, bevorzugt zwischen 0,2 und 0,7 liegen, und die Wirkstoffe in der Träger-Wirkstoff-Kombination in einer Konzentration zwischen 0,1 und 20 Gew.-%, bevorzugt zwischen 0,1 und 10 Gew.-% vorliegen.

3. Verfahren zur Herstellung von Träger-Wirkstoff-Kombinationen nach Anspruch 1 und 2, dadurch gekennzeichnet, daß beim Einarbeiten von flüssigen Wirkstoffen in organische Polymere in Extrudern ohne Zwangsförderung die Polymergranulate teilweise oder ganz durch Polymerpulver und/oder teilweise durch andere pulverförmige Adsorbentien, z.B. feinteilige Silicagele, substituiert werden.

4. Organische Polymere als Träger nach Anspruch 1 oder einem der folgenden, gekennzeichnet durch ihre Abstammung von Polymerisaten, z.B. Poly-α-olefine, und/oder Polykondensaten, z.B. Polyamide, und/oder Polyaddukten, z.B. lineare Polyurethanen, und/oder abgewandelten Naturprodukten, z.B. Celluloseestern.

5. Pflanzenschutzmittel nach Anspruch 1 oder einem der folgenden, gekennzeichnet durch ihre Abstammung aus der Klasse der Insektizide und/oder Akarizide und/oder Nematizide und/oder Repellents und/oder Fungizide und/oder Herbizide und/oder Rodentizide und/der Molluskizide und/der Wuchs- und Hemmstoffe und/oder Synergisten.

6. Hilfsstoffe nach Anspruch 1 oder einem der folgenden, gekennzeichnet durch ihre Abstammung aus der Gruppe der Polymeradditive, bevorzugt aus der Klasse der Antioxidantien und/oder Lichtschutzmittel und/oder Gleitmittel und/oder Weichmacher und/oder Antistatika und/oder Pigmente und Füllstoffe.

7. Verwendung der Folien, Vliese, oder Gewebe nach Anspruch 1 oder einem der folgenden zur Mulchbedeckung des Bodens und/oder Pflanzenbedeckung durch Flachbedeckung und/oder Tunnelbedeckung und/oder Gewächshausbedeckung.

8. Verwendung der Folien, Vliese und/oder Gewebe zum Schutz von Erntegut nach Anspruch 1 oder einem der folgenden vor Schadorganismen von außen und/oder vor im Erntegut befindlichen Schadorganismen.

1/1

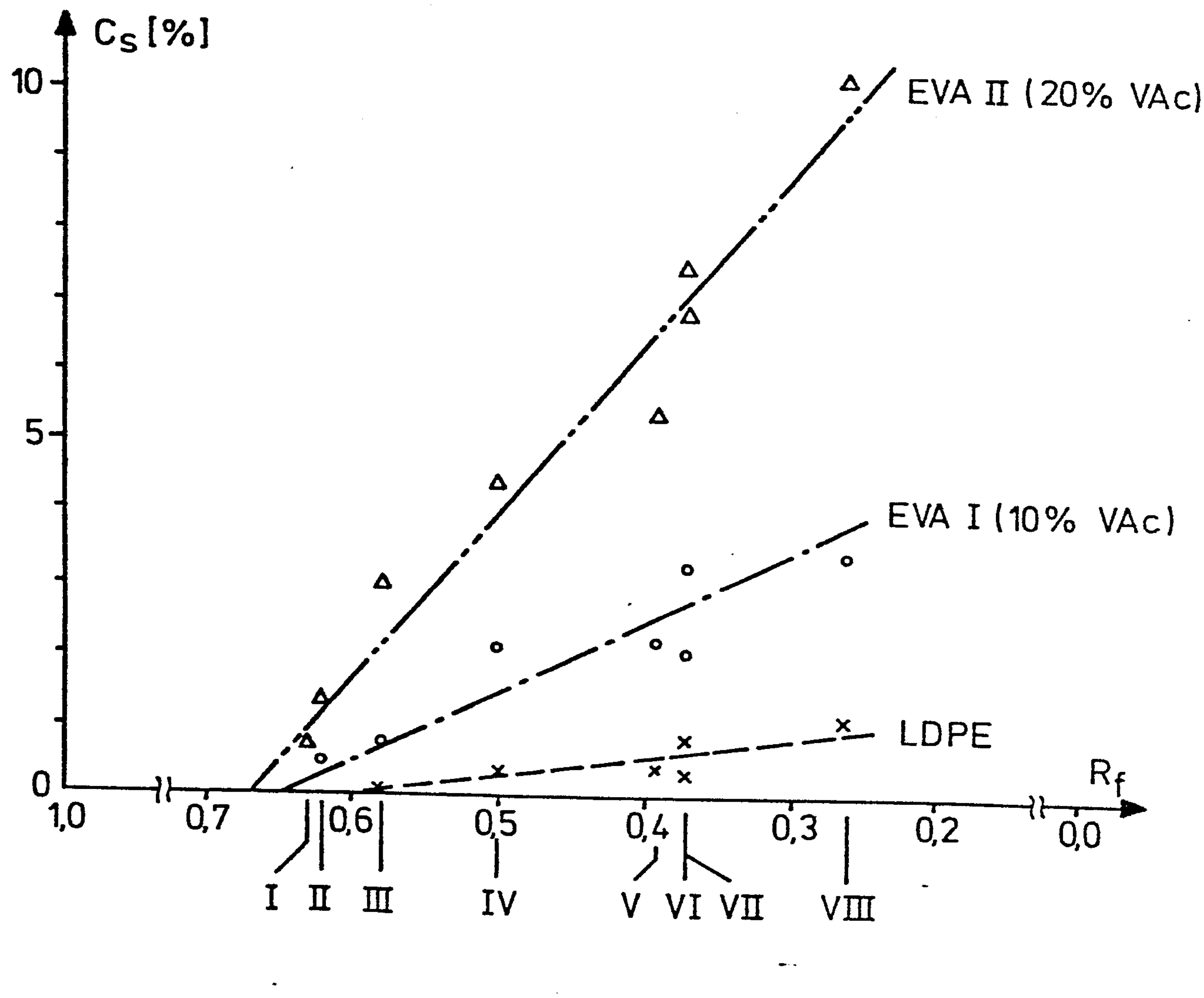

$C_S$ [%]
10
5
0
EVA II (20% VAc)
EVA I (10% VAc)
LDPE
$R_f$
1,0
0,7
0,6
0,5
0,4
0,3
0,2
0,0
I
II
III
IV
V
VI
VII
VIII

0142658

Europäisches Patentamt

**EUROPÄISCHER RECHERCHENBERICHT**

Nummer der Anmeldung

EP 84 11 0918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| | | | A 01 N 25/34 |
| X | DIE ANGEWANDTE MAKROMOLEKULARE CHEMIE, Band 116, Nr.116, September 1983, Seiten 139-148, Hüthig & Wepf Verlag (Basel), Heidelberg, DE; M. BAHADIR u.a.: "Pestizide Polymere, 2. Untersuchung der Herstellungsparameter pestizidenthaltender LDPE- und EVA-Folien" --- | 1-8 | |
| X | GB-A-1 568 936 (EXTHENE PTY.) * Ansprüche * ----- | 1,4-6, 8 | |
| | | | RECHERCHIERTE SACHGEBIETE (Int. Cl 4) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 13-02-1985 | DECORTE D. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument